# EUROPEAN PATENT APPLICATION

(11) **EP 4 773 446 A1**
(43) Date of publication of application: **08.07.2026**
(21) Application number: 25226653.1
(22) Date of filing: 23.12.2025
(51) Int. Cl.: H01R 13/447, H01R 13/652, H01R 24/30, H01R 31/06, H01R 13/04, H02J 7/70

(54) **PLUG STRUCTURE AND ITS CHARGER**

(30) Priority: 30.12.2024 CN 202411968161
(71) Applicant: Dongguan Aohai Technology Co., Ltd., Dongguan City, Guangdong Province (CN)
(72) Inventor: LI, Dongdong, Dongguan, Guangdong (CN); PENG, Jixiang, Dongguan, Guangdong (CN); ZHOU, Chaohua, Dongguan, Guangdong (CN); LIN, Yanrui, Dongguan, Guangdong (CN); GUO, Xiugen, Dongguan, Guangdong (CN)
(74) Representative: Herrero & Asociados, S.L.

(57) **Abstract**

The present application discloses a plug structure and a charger. The plug structure includes a first pin, a second pin, a grounding pin, and two mating covers. The first pin and the second pin are inserted into one end of the main body, the two covers are each rotatably connected to the end of the main body, and the grounding pin is rotatably arranged on either of the two mating covers. The two mating covers of the present application engage with each other when rotated about the end of the main body, and accommodate the first pin, the second pin, and the grounding pin within the two mating covers. Before the two mating covers are engaged, the grounding pin is rotated to fit against its corresponding mating cover. Engaging the two mating covers stores all pins, reducing volume, creating a slim, compact, aesthetically pleasing charger that's protective, convenient, and portable.

## Description

### Technical Field

The present application relates to the field of charger manufacturing technology, and more particularly to a plug structure and its charger.

### Background

In existing British-standard chargers, the live (L) pin, neutral (N) pin, and grounding pin, are generally fixed and exposed. The overall structure is relatively large, making it prone to causing scratches or damage during carrying, inconvenient to carry, and aesthetically unappealing.

### Summary of the application

The present application aims to provide a plug structure and a charger, designed to address the technical problems of conventional chargers being inconvenient to carry and having an unsightly overall appearance.

To address the above problems, according to one aspect of the present application, an embodiment of the application provides a plug structure applied to a charger, the charger including a main body, the plug structure including a first pin, a second pin, a grounding pin, and two mating covers. The first pin and the second pin are inserted into one end of the main body, the two mating covers are each rotatably connected to the end of the main body, and the grounding pin is rotatably arranged on either of the two mating covers.

When the two mating covers rotate about the end of the main body, the covers engage with each other and accommodate the first pin, the second pin, and the grounding pin within the two mating covers.

In some embodiments, the mating cover includes an inner cover and an outer cover engaging with one side of the inner cover, the inner covers of the two mating covers each have, on a side facing each other, a first receiving groove conFig. d to accommodate the grounding pin when the mating covers are engaged.

**In** some embodiments, the inner cover is provided at an end facing the main body with a connecting portion, the main body has an insertion slot, and the connecting portion is inserted into the insertion slot, both the main body and the connecting portion have a through hole coaxial with the rotational axis of the mating cover, and a dowel pin passes through both through holes.

**In** some embodiments, a side of the connecting portion away from the inner cover is provided with engaging teeth, so that the two mating covers are linked to move together.

**In** some embodiments, the sides of the inner covers of the two mating covers facing each other are respectively provided with a second receiving groove and a third receiving groove conFig. d to accommodate the first pin and the second pin; and/or a magnetic member is arranged between the inner cover and the outer cover.

**In** some embodiments, the first receiving groove passes through the inner cover toward the outer cover, the grounding pin has a pivot shaft, the pivot shaft is rotatably clamped between the inner cover and the outer cover and passes through the first receiving groove, and the outer cover and the inner cover form the housing and the inner portion, respectively, of the mating cover having the grounding pin.

**In** some embodiments, the pivot shaft includes a limiting shaft section, a spring sheet is arranged between the inner cover and the outer cover, the spring sheet has a bent portion protruding toward the limiting shaft section, the bent portion abuts the limiting shaft section, when an angle between the grounding pin and the inner cover is greater than a first preset angle, the bent portion causes the grounding pin to rotate to an extended state perpendicular to the inner cover; when the angle between the grounding pin and the inner cover is less than a second preset angle, the bent portion causes the grounding pin to rotate to a stored state within the first receiving groove, and the first preset angle is less than or equal to the second preset angle.

**In** some embodiments, the limiting shaft section includes a first rotation-stop surface and a second rotation-stop surface connected at a third preset angle, the first rotation-stop surface and the second rotation-stop surface are arranged opposite and facing away from each other, the bent portion includes a third rotation-stop surface and a fourth rotation-stop surface connected at a fourth preset angle, the third rotation-stop surface and the fourth rotation-stop surface are arranged opposite and facing away from each other; in the extended state, the first rotation-stop surface abuts the third rotation-stop surface, and in the stored state, the second rotation-stop surface abuts the fourth rotation-stop surface.

**In** some embodiments, one end of the main body is provided with a fourth receiving groove conFig. d to accommodate the top of the grounding pin, and when the two mating covers are engaged, the grounding pin is accommodated within a space formed by the first receiving groove and the fourth receiving groove.

According to another aspect of the present application, an embodiment of the application further provides a charger, including a main body and the plug structure as described above.

Compared with the prior art, the plug structure of the present application has at least the following advantageous effects.

An embodiment of the present application discloses a plug structure applied to a charger, which may specifically be a British-standard charger. The charger includes a main body, and the plug structure includes a first pin, a second pin, a grounding pin, and two mating covers. The first pin and the second pin are inserted into one end of the main body, the two covers are each rotatably connected to the end of the main body, and the grounding pin is rotatably arranged on either of the two mating covers.

The two mating covers of the present application engage with each other when rotated about the end of the main body, and accommodate the first pin, the second pin, and the grounding pin within the two mating covers. Before the two mating covers are engaged, the grounding pin is rotated to fit against its corresponding mating cover. By engaging the two mating covers of the plug structure, the first pin, the second pin, and the grounding pin are accommodated within the two mating covers, thereby reducing volume and achieving a slim overall profile. This makes the charger not only compact and aesthetically pleasing, but also provides a complete overall appearance, protects the pins while maintaining visual appeal, and is convenient and easy to carry, resulting in improved usability.

According to another aspect, the charger provided by the present application is manufactured based on the above-described plug structure. The advantageous effects of the charger correspond to those of the plug structure described above and will not be repeated here.

The foregoing description is merely an overview of the technical solution of the present application. In order to more clearly understand the technical means of the application and to enable implementation according to the contents of the specification, the following provides a detailed description of preferred embodiments of the application in conjunction with the accompanying drawings.

### Brief Description of the Drawings

In order to more clearly illustrate the technical solutions of the embodiments of the present application, the drawings used in the embodiments are briefly described below. It is apparent that the drawings described below illustrate only certain embodiments of the application. For those skilled in the art, other drawings can be obtained based on these drawings without any inventive effort.
Fig. 1 is a schematic view of the plug structure provided by an embodiment of the present application.
Fig. 2 is a schematic view of the plug structure in another state according to an embodiment of the present application.
Fig. 3 is an exploded view of the plug structure according to an embodiment of the present application.
Fig. 4 is an exploded view of the mating cover of the plug structure according to an embodiment of the present application.
Fig. 5 is an exploded view of the mating cover of the plug structure with the grounding pin according to an embodiment of the present application.
Fig. 6 is an exploded view of the pivot shaft and spring sheet when the grounding pin of the plug structure is in an extended state according to an embodiment of the present application.
Fig. 7 is an exploded view of the pivot shaft and spring sheet when the grounding pin of the plug structure is in a stored state according to an embodiment of the present application.

### Reference Signs:

1. Main body; 11. Insertion slot; 12. Through hole; 13. Fourth receiving groove;
2. First pin;
3. Second pin;
4. Grounding pin; 41. Pivot shaft; 411. First rotation-stop surface; 412. Second rotation-stop surface;
5. Mating cover; 51. Inner cover; 511. First receiving groove; 515. Engaging teeth; 512. Connecting portion; 513. Second receiving groove; 514. Third receiving groove; 52. Outer cover;
6. Dowel pin;
7. Magnetic member;
8. Spring sheet; 81. Third rotation-stop surface; 82. Fourth rotation-stop surface.

### Detailed Description of Embodiments

In order to further illustrate the technical means and effects employed by the present application to achieve the intended objectives, the following provides a detailed description of specific embodiments, structures, features, and their effects in accordance with the present application, in conjunction with the accompanying drawings and preferred embodiments. In the following description, different "an embodiment" or "embodiments" do not necessarily refer to the same embodiment. Moreover, specific features, structures, or characteristics in one or more embodiments may be combined in any suitable manner.

It should be noted that in the description of the present application, the terms "first," "second," and the like, as used in the specification, claims, and the accompanying drawings, are employed to distinguish similar objects and are not necessarily indicative of a particular order or sequence. Terms such as "vertical," "horizontal," "longitudinal," "front," "rear," "left" , "right" , "upper," "lower," and "level" indicating orientation or positional relationships are based on the orientations or positions shown in the drawings, provided solely for ease of description of the application, and do not imply that the devices or elements must have a particular orientation or position. Therefore, such terms should not be construed as limiting the application.

It should also be noted that, unless otherwise explicitly defined or limited, the terms "mounted," "connected," and "coupled" are to be interpreted broadly. For example, they may refer to fixed or detachable connections, or integral connections; they may be mechanical or electrical connections; they may be direct connections or indirect connections via an intermediate medium. Those skilled in the art can understand the specific meaning of these terms in the context of the present application based on the actual situation.

### Embodiment 1

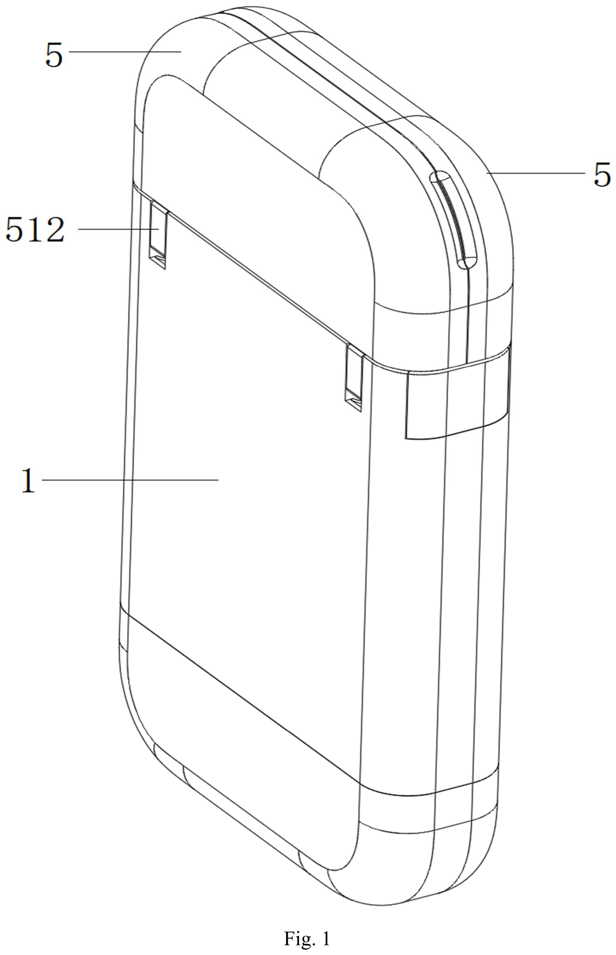

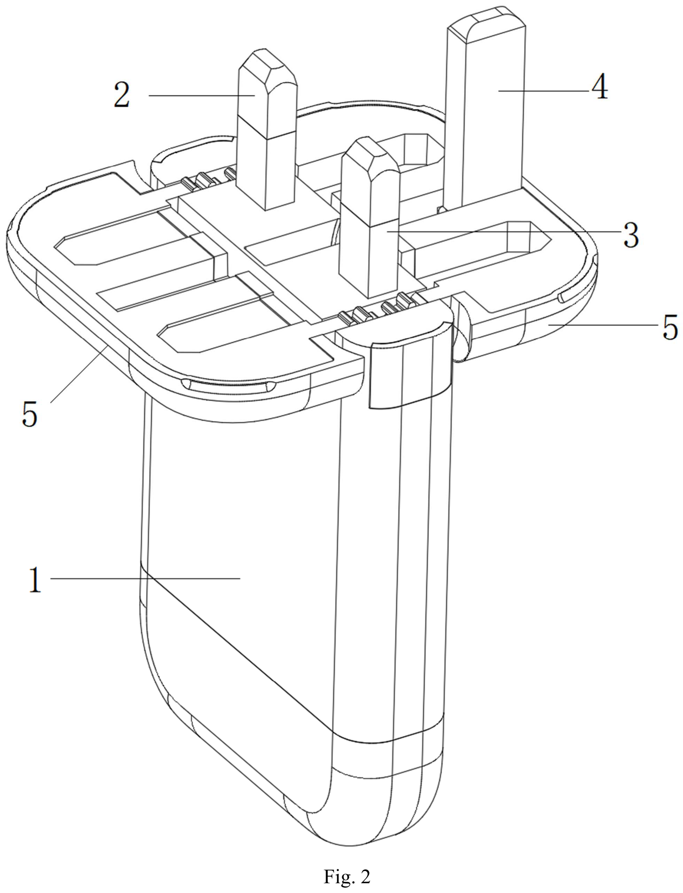

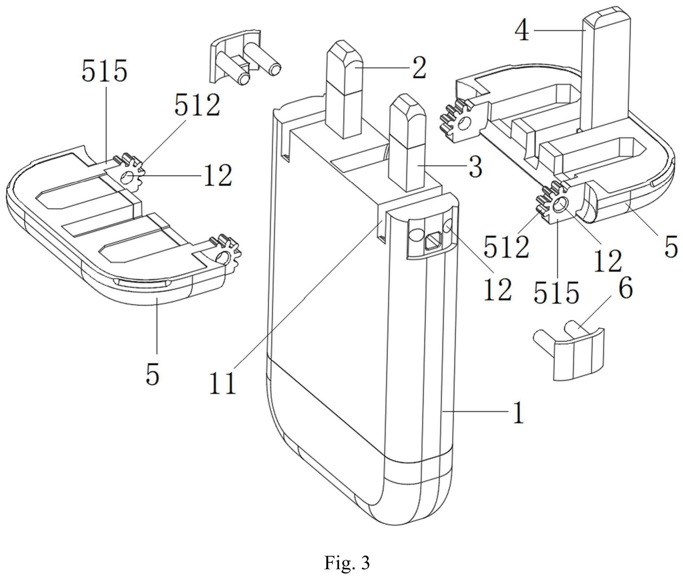

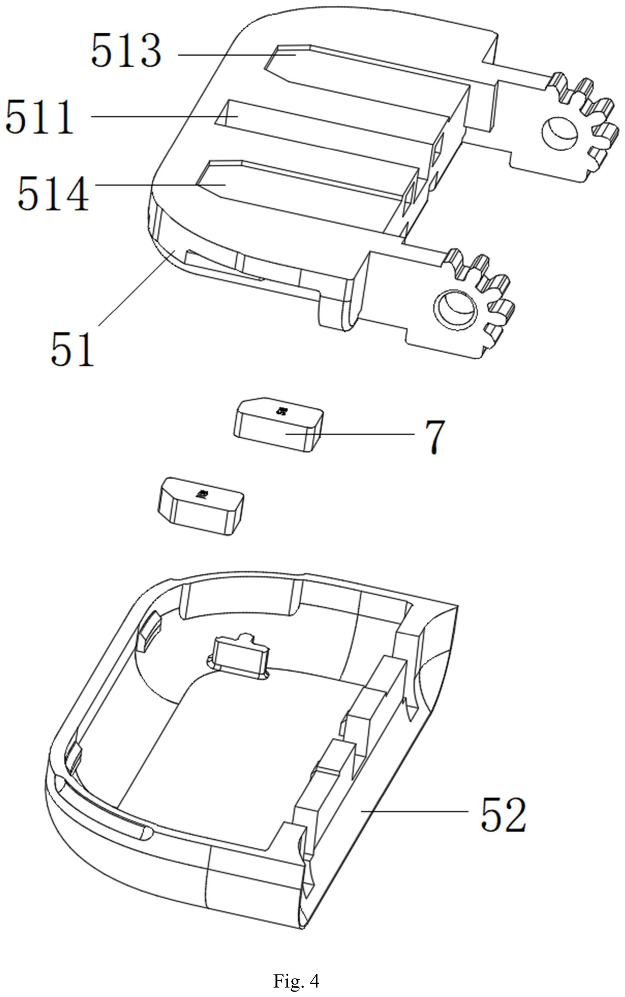

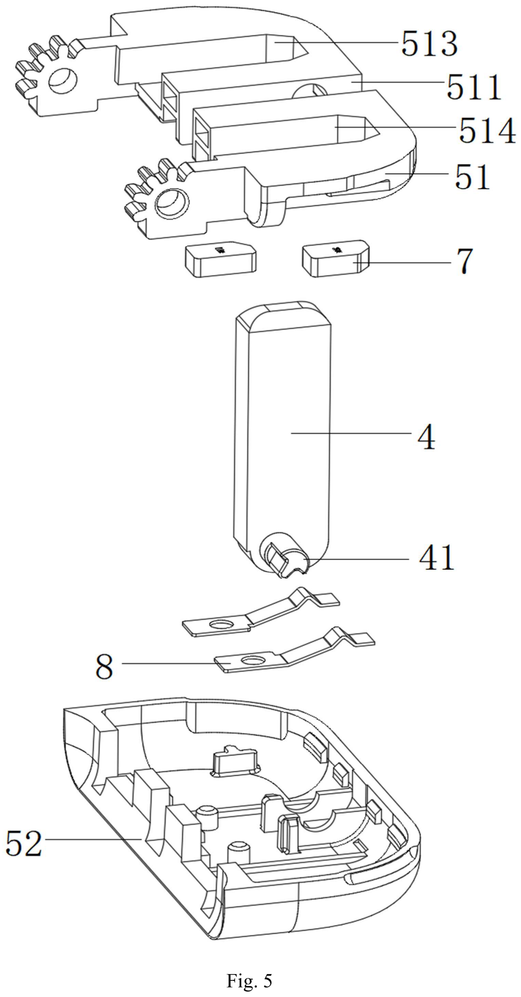

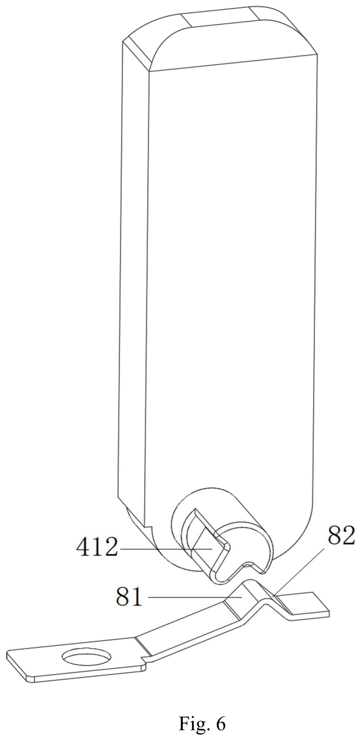

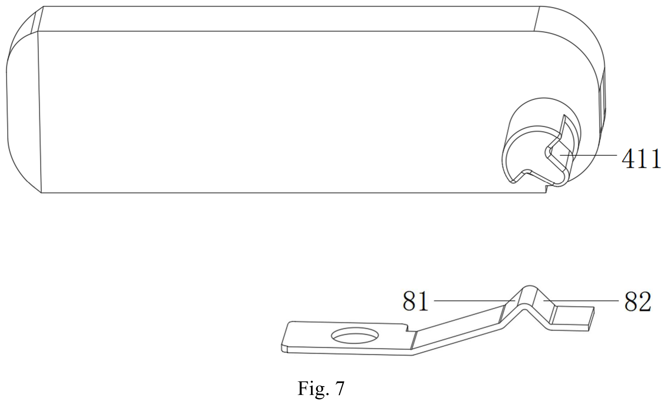

As shown in Figs. 1-7, an embodiment of the present application provides a plug structure applied to a charger. The charger includes a main body 1, and the plug structure includes a first pin 2, a second pin 3, a grounding pin 4, and two mating covers 5. The first pin 2 and the second pin 3 are inserted into an end of the main body 1, the two mating covers 5 are each rotatably connected to the end of the main body 1, and the grounding pin 4 is rotatably arranged on either of the two mating covers 5.

When the two mating covers 5 rotate about the end of the main body 1, the covers engage with each other and accommodate the first pin 2, the second pin 3, and the grounding pin 4 within the two mating covers 5.

**In** this embodiment, the plug structure is applied to a charger, which may specifically be a British-standard charger. The charger includes the main body 1, and the plug structure includes the first pin 2, the second pin 3, the grounding pin 4, and the two mating covers 5. The first pin 2 and the second pin 3 are inserted into an end of the main body 1, the two mating covers 5 are each rotatably connected to the end of the main body 1, and the grounding pin 4 is rotatably arranged on either of the two mating covers 5.

When the two mating covers 5 rotate about the end of the main body 1, the covers engage with each other and accommodate the first pin 2, the second pin 3, and the grounding pin 4 within the two mating covers 5. Before the two mating covers 5 are engaged, the grounding pin 4 is rotated to align with its corresponding mating cover 5. In this embodiment, by engaging the two mating covers 5 of the plug structure, the first pin 2, the second pin 3, and the grounding pin 4 are accommodated within the two mating covers 5, thereby reducing the overall volume and making the charger compact and thin. As a result, the charger is not only small and aesthetically pleasing, but also has a complete overall appearance, protects the pins, and is convenient to use and carry, achieving better usability.

In some embodiments, the mating cover 5 includes an inner cover 51 and an outer cover 52 engaging with one side of the inner cover 51. The inner covers 51 of the two mating covers 5 each have, on a side facing each other, a first receiving groove 511 conFig. d to accommodate the grounding pin 4 when the mating covers 5 are engaged.

In this embodiment, by forming the first receiving groove 511 on the sides of the inner covers 51 of the two mating covers 5 facing each other, before the two mating covers 5 are engaged, the grounding pin 4 is first rotated so that part of the grounding pin 4 is accommodated in the first receiving groove 511 of the inner cover 51 of its corresponding mating cover 5. Then, the two mating covers 5 are engaged, allowing the remaining part of the grounding pin 4 to be accommodated in the first receiving groove 511 of the inner cover 51 of the other mating cover 5. As a result, the overall volume is reduced and the structure is compact and thin, making the charger not only small and aesthetically pleasing, but also complete in overall appearance, protecting the pins while enhancing the aesthetic effect. Moreover, it is convenient to use and carry, achieving better usability.

In some embodiments, the inner cover 51 is provided at an end facing the main body 1 with a connecting portion 512. The main body 1 has an insertion slot 11, and the connecting portion 512 is inserted into the insertion slot 11. Both the main body 1 and the connecting portion 512 have a through hole 12 coaxial with a rotational axis of the mating cover 5, and a dowel pin 6 passes through both through holes 12.

In this embodiment, by inserting the connecting portion 512 at the end of the inner cover 51 facing the main body 1 into the insertion slot 11 of the main body 1, and passing the dowel pin 6 through the through hole 12 of the connecting portion 512 and the through hole 12 of the mating cover 5 simultaneously, the mating cover 5 is rotatably arranged on the main body 1, enabling the two mating covers 5 to be engaged or opened.

In some embodiments, a side of the connecting portion 512 away from the inner cover 51 is provided with engaging teeth 515 to link the two mating covers 5 for coordinated movement.

In this embodiment, by forming engaging teeth 515 on the side of the connecting portion 512 away from the inner cover 51, the two mating covers 5 are linked to move together. Specifically, the connecting portion 512 of the inner cover 51 of the two mating covers 5 is inserted into one insertion slot 11 of the main body 1, and the engaging teeth 515 of the connecting portions 512 of the inner covers 51 of the two mating covers 5 engage with each other. When one mating cover 5 is rotated, the other mating cover 5 rotates synchronously in the opposite direction. Therefore, the structure of this embodiment allows the two mating covers 5 to be linked for coordinated movement.

In some embodiments, the sides of the inner covers 51 of the two mating covers 5 facing each other are respectively provided with a second receiving groove 513 and a third receiving groove 514 conFig. d to accommodate the first pin 2 and the second pin 3.

In this embodiment, by providing the second receiving groove 513 and the third receiving groove 514 on the sides of the inner covers 51 of the two mating covers 5 facing each other, the structure can reduce the volume and make the overall structure compact and thin, so that the charger is not only small and aesthetically pleasing, but also has a complete overall appearance, protects the pins and maintains aesthetic effect, and is convenient to use and carry, achieving better usage effect.

In some embodiments, a magnetic member 7 is arranged between the inner cover 51 and the outer cover 52.

In this embodiment, by arranging a magnetic member 7 between the inner cover 51 and the outer cover 52, when the two mating covers 5 are engaged, the attractive force of the magnetic members 7 on the two mating covers 5 can fix the two mating covers 5, thereby preventing the two mating covers 5 from opening easily when not in use, keeping the two mating covers 5 closed, and achieving the purpose of hiding the first pin 2, the second pin 3, and the grounding pin 4.

In some embodiments, the first receiving groove 511 passes through the inner cover 51 toward the outer cover 52, and the grounding pin 4 has a pivot shaft 41. The pivot shaft 41 is rotatably clamped between the inner cover 51 and the outer cover 52 and passes through the first receiving groove 511. The outer cover 52 and the inner cover 51 form the housing and inner cover 51, respectively, of the mating cover 5 having the grounding pin 4.

In this embodiment, the first receiving groove 511 passes through the inner cover 51 toward the outer cover 52, and the grounding pin 4 has a pivot shaft 41. The pivot shaft 41 is rotatably clamped between the inner cover 51 and the outer cover 52 and passes through the first receiving groove 511. The outer cover 52 and the inner cover 51 form the housing and inner cover 51, respectively, of the mating cover 5 having the grounding pin 4. A semicircular positioning groove adapted to the pivot shaft 41 can be arranged between the inner cover 51 and the outer cover 52. Since the grounding pin 4 passes through the first receiving groove 511, the grounding pin 4 can rotate about the pivot shaft 41 to be accommodated within the first receiving groove 511, or partially protrude outside the first receiving groove 511. When the charger is in use, the grounding pin 4 is perpendicular to the mating cover 5.

In some embodiments, the pivot shaft 41 includes a limiting shaft section, and a spring sheet 8 is arranged between the inner cover 51 and the outer cover 52. The spring sheet 8 has a bent portion protruding toward the limiting shaft section, and the bent portion abuts against the limiting shaft section. When an angle between the grounding pin 4 and the inner cover 51 is greater than a first preset angle, the bent portion causes the grounding pin 4 to rotate to an extended state perpendicular to the inner cover 51. When the angle between the grounding pin 4 and the inner cover 51 is less than a second preset angle, the bent portion causes the grounding pin 4 to rotate to a stored state within the first receiving groove 511. The first preset angle is less than or equal to the second preset angle.

In this embodiment, by providing a limiting shaft section on the pivot shaft 41 and arranging a spring sheet 8 between the inner cover 51 and the outer cover 52, with one end of the spring sheet 8 fixed to the inner cover 51 or the outer cover 52, the spring sheet 8 is formed with a bent portion protruding toward the limiting shaft section. The bent portion cooperates with the limiting shaft section such that, when the grounding pin 4 is rotated to an angle with the inner cover 51 greater than a first preset angle, the bent portion causes the grounding pin 4 to rotate to an extended state perpendicular to the inner cover 51. When the grounding pin 4 is rotated to an angle with the inner cover 51 less than a second preset angle, the bent portion causes the grounding pin 4 to rotate to a stored state within the first receiving groove 511, ensuring the overall integrity and aesthetic appearance. During use, when the two mating covers 5 are opened, the grounding pin 4 can be popped out to the extended state or returned to the stored state in a semi-automatic rebound manner, improving operational convenience.

In some embodiments, the first preset angle can be 45 degrees or another angle, and the second preset angle can be 45 degrees or another angle.

In some embodiments, the limiting shaft section includes a first rotation-stop surface 411 and a second rotation-stop surface 412 connected at a third preset angle, the first rotation-stop surface 411 and the second rotation-stop surface 412 are arranged opposite and facing away from each other, the bent portion includes a third rotation-stop surface 81 and a fourth rotation-stop surface 82 connected at a fourth preset angle, the third rotation-stop surface 81 and the fourth rotation-stop surface 82 are arranged opposite and facing away from each other, in the extended state, the first rotation-stop surface 411 abuts the third rotation-stop surface 81, and in the stored state, the second rotation-stop surface 412 abuts the fourth rotation-stop surface 82.

In this embodiment, the limiting shaft section includes a first rotation-stop surface 411 and a second rotation-stop surface 412 connected at a third preset angle, the first rotation-stop surface 411 and the second rotation-stop surface 412 are arranged opposite and facing away from each other, the bent portion includes a third rotation-stop surface 81 and a fourth rotation-stop surface 82 connected at a fourth preset angle, the third rotation-stop surface 81 and the fourth rotation-stop surface 82 are arranged opposite and facing away from each other, in the extended state, the first rotation-stop surface 411 abuts the third rotation-stop surface 81, and in the stored state, the second rotation-stop surface 412 abuts the fourth rotation-stop surface 82. The structure of this embodiment can achieve, by selecting appropriate third and fourth preset angles, that when the grounding pin 4 is rotated to form an angle with the inner cover 51 greater than the first preset angle, the bent portion causes the grounding pin 4 to rotate to an extended state perpendicular to the inner cover 51, and when the grounding pin 4 is rotated to form an angle with the inner cover 51 smaller than the second preset angle, the bent portion causes the grounding pin 4 to rotate to a stored state accommodated within the first receiving groove 511.

In some embodiments, an end of the main body 1 is provided with a fourth receiving groove 13 conFig. d to accommodate the top of the grounding pin 4, and when the two mating covers 5 are engaged, the grounding pin 4 is accommodated within a space formed by the first receiving groove 511 and the fourth receiving groove 13.

### Embodiment 2

This embodiment of the application further provides a charger, which includes a main body 1 and the plug structure of Embodiment 1.

Those skilled in the art will readily understand that, for convenience and brevity of description, the specific operation processes of the devices, apparatuses, and units described above can refer to the corresponding processes in the method embodiments described previously, and are not repeated here.

The foregoing description is merely the specific embodiments of the present application, but the scope of the application is not limited thereto. Any person skilled in the art may easily conceive various equivalent modifications or substitutions within the technical scope disclosed by the present application, and such modifications or substitutions should be encompassed within the protection scope of the present application. Therefore, the protection scope of the present application should be defined by the claims.

## Claims

1. A plug structure, applied to a charger, the charger comprising a main body (1), **characterized in that**:
the plug structure comprises a first pin (2), a second pin (3), a grounding pin (4), and two mating covers (5),
wherein the first pin (2) and the second pin (3) are inserted into an end of the main body (1), the two mating covers (5) are each rotatably connected to the end of the main body (1), and the grounding pin (4) is rotatably arranged on either of the two mating covers (5);
wherein, when the two mating covers (5) rotate about the end of the main body (1), the covers engage with each other and accommodate the first pin (2), the second pin (3), and the grounding pin (4) within the two mating covers (5).

2. The plug structure of claim 1, wherein
the mating cover (5) comprises an inner cover (51) and an outer cover (52) engaging with one side of the inner cover (51),
the inner covers (51) of the two mating covers (5) each have, on a side facing each other, a first receiving groove (511) conFig. d to accommodate the grounding pin (4) when the mating covers (5) are engaged.

3. The plug structure of claim 2, wherein
the inner cover (51) is provided at an end facing the main body (1) with a connecting portion (512),
the main body (1) has an insertion slot (11), and the connecting portion (512) is inserted into the insertion slot (11),
both the main body (1) and the connecting portion (512) have a through hole (12) coaxial with a rotational axis of the mating cover (5),
and a dowel pin (6) passes through both through holes (12).

4. The plug structure of claim 3, wherein
a side of the connecting portion (512) away from the inner cover (51) is provided with engaging teeth (515), so that the two mating covers (5) are linked to move together.

5. The plug structure of claim 2, wherein
the sides of the inner covers (51) of the two mating covers (5) facing each other are respectively provided with a second receiving groove (513) and a third receiving groove (514) conFig. d to accommodate the first pin (2) and the second pin (3); and/or
a magnetic member (7) is arranged between the inner cover (51) and the outer cover (52).

6. The plug structure of claim 2, wherein
the first receiving groove (511) passes through the inner cover (51) toward the outer cover (52),
the grounding pin (4) has a pivot shaft (41), the pivot shaft (41) is rotatably clamped between the inner cover (51) and the outer cover (52) and passes through the first receiving groove (511), and
the outer cover (52) and the inner cover (51) form a housing and the inner cover (51), respectively, of the mating cover (5) having the grounding pin (4).

7. The plug structure of claim 6, wherein
the pivot shaft (41) comprises a limiting shaft section,
a spring sheet (8) is arranged between the inner cover (51) and the outer cover (52), the spring sheet (8) has a bent portion protruding toward the limiting shaft section, the bent portion abuts against the limiting shaft section;
when an angle between the grounding pin (4) and the inner cover (51) is greater than a first preset angle, the bent portion causes the grounding pin (4) to rotate to an extended state perpendicular to the inner cover (51);
when the angle between the grounding pin (4) and the inner cover (51) is less than a second preset angle, the bent portion causes the grounding pin (4) to rotate to a stored state within the first receiving groove (511); and
the first preset angle is less than or equal to the second preset angle.

8. The plug structure of claim 7, wherein
the limiting shaft section comprises a first rotation-stop surface (411) and a second rotation-stop surface (412) connected at a third preset angle, the first rotation-stop surface (411) and the second rotation-stop surface (412) are arranged opposite and facing away from each other,
the bent portion comprises a third rotation-stop surface (81) and a fourth rotation-stop surface (82) connected at a fourth preset angle, the third rotation-stop surface (81) and the fourth rotation-stop surface (82) are arranged opposite and facing away from each other,
in the extended state, the first rotation-stop surface (411) abuts the third rotation-stop surface (81), and
in the stored state, the second rotation-stop surface (412) abuts the fourth rotation-stop surface (82).

9. The plug structure of claim 2, wherein
an end of the main body (1) is provided with a fourth receiving groove (13) conFig. d to accommodate the top of the grounding pin (4), and
when the two mating covers (5) are engaged, the grounding pin (4) is accommodated within a space formed by the first receiving groove (511) and the fourth receiving groove (13).

10. A charger, comprising a main body (1) and the plug structure of any one of claims 1 to 9.
